# EUROPÄISCHE PATENTSCHRIFT

(11) **EP 1 154 555 B1**
(45) Veröffentlichungstag und Bekanntmachung des Hinweises auf die Patenterteilung: **28.07.2004**
(21) Anmeldenummer: 01110145.8
(22) Anmeldetag: 04.05.2001
(51) Int. Cl.: H02P 6/14, H02P 6/18, H02P 6/20

(54) **System zur elektronischen Kommutierung eines bürstenlosen Gleichstrommotors**
System for electronic commutating a brushless dc motor
Système de commutation électronique pour un moteur à courant continu sans balai

(30) Priorität: 12.05.2000 DE 10023370
(43) Veröffentlichungstag der Anmeldung: 14.11.2001
(73) Patentinhaber: ebm-papst Mulfingen GmbH & Co.KG, 74673 Mulfingen (DE)
(72) Erfinder: Krotsch, Jens, Dipl.-Ing.(FH), 97996 Niederstetten (DE); Kilian, Thomas, Dipl.-Ing.(FH), 74214 Schöntal-Westernhausen (DE)
(74) Vertreter: Zapf, Christoph, Dipl.-Ing.

(56) Entgegenhaltungen:
- EP-A- 0 872 948
- DE-A- 3 306 642
- DE-A- 3 934 139
- US-A- 5 491 393
- US-A- 5 757 152
- US-A- 5 835 992

## Beschreibung

Die vorliegende Erfindung betrifft ein System zur elektronischen Kommutierung eines bürstenlosen Gleichstrommotors mit drei elektrisch um 120° versetzten Wicklungssträngen, mit einer die Wicklungsstränge zur Erzeugung eines magnetischen Statordrehfeldes ansteuernden Halbleiterbrücke aus sechs Leistungshalbleitern, einer die Leistungshalbleiter entsprechend ansteuernden Steuereinheit sowie einer Einrichtung zur Erfassung der jeweiligen Drehstellungen eines ein permanent- magnetisches Polrad aufweisenden Rotors, wobei die Einrichtung zur Erfassung der Rotor-Drehstellung als sensorlose Auswerteeinheit derart ausgebildet ist, daß eine Erfassung und Auswertung der jeweils am gerade nicht angesteuerten Wicklungsstranganschluß meßbaren, vom rotierenden Polrad induzierten Spannung erfolgt.

Zur elektronischen Kommutierung von kollektorlosen Gleichstrommotoren müssen der die Halbleiterbrücke ansteuernden Steuereinheit grundsätzlich Informationen über die aktuelle Drehlage des permanentmagnetischen Rotors relativ zum Stator zugeführt werden, damit zur Erzeugung eines Drehmomentes in der gewünschten Drehrichtung die jeweils geeigneten Wicklungsstränge angesteuert werden können, um so ein optimales Statordrehfeld zu erzeugen. Im allgemeinen wird die Rotorlage durch Drehstellungssensoren, insbesondere Hall-Sensoren, anhand des permanentmagnetischen Rotorfeldes festgestellt. Vielfach müssen aber der Motor und seine zugehörige Kommutierungselektronik räumlich voneinander getrennt werden, so daß elektrische Verbindungsleitungen erforderlich sind, über die einerseits die Wicklungsstränge bestromt und andererseits die Signale der Rotor-Drehstellungssensoren zu der Steuerelektronik übertragen werden. Die Verbindungsleitungen und die notwendigen Verbindungen, z.B. Steckverbindungen, führen aber zu einem recht hohen Kostenaufwand insbesondere für Herstellung (Montage) und Material und steigern zudem auch die Störungsanfälligkeit.

Im Gegensatz dazu ist bei Systemen der gattungsgemäßen Art eine sensorlose Erfassung der Rotor-Drehstellungen vorgesehen, wodurch auf (Hall-)Sensoren und entsprechende separate Leitungsverbindungen verzichtet werden kann. Statt dessen werden dabei die Polaritäten bzw. Polaritätswechsel (Nulldurchgänge) der vom permanentmagnetischen Rotorfeld in den Motorwicklungen induzierten Spannungen (Polradspannung bzw. EMK = elektromotorische Kraft) über den jeweils nicht angesteuerten stromlosen Wicklungsanschluß erfaßt und ausgewertet.

Ein solches sensorloses Kommutierungssystem ist beispielsweise aus der EP 0 881 761 A1 bekannt. Dabei werden zur sensorlosen Rotorpositionsbestimmung durch eine EMK-Detektorschaltung die Spannungen an den drei Motorwicklungsanschlüssen faßt und daraus drei korrespondierende binäre Ausgangssignale generiert. Über eine elektrische Umdrehung des Rotors werden auf diese Weise sechs verschiedene Kombinationen dieser Ausgangssignale erzeugt, welches eine Bestimmung der Rotorposition in 60°-Segmenten ermöglicht. Jeder Kombination bzw. jedem Rotorpositionssegment wird ein Schaltzustand der Brückenhalbleiter zugeordnet (wobei beim jeweiligen Schaltzustand ein Halbleiter zur Drehzahlstellung pulsweitenmoduliert getaktet wird). Über eine elektrische Umdrehung existieren demzufolge sechs verschiedene Schaltzustände in 60°-Abständen. Hierbei wird die Statorerregung (Statorfeld) in sechs Schritten innerhalb einer elektrischen Umdrehung weitergeschaltet, so daß es sich um eine 6-Schritt-Kommutierung handelt.

Ähnliche Kommutierungsschaltungen mit 6-Schritt-Kommutierung sind auch in den Dokumenten EP 0 872 948 A1, DE 39 34 139 C2, DE 33 06 642 C2 und DE 36 02 227 A1 beschrieben.

Die US-A-5 491 393 beschreibt eine Kommutierungssteuerung für bürstenlose Gleichstrom-Motoren, wobei es sich grundsätzlich auch um eine 6-Schritt-Kommutierung handelt, weil eine elektrische Umdrehung des Motors bezüglich der wechselnden Richtung der Stator-Erregung in sechs Grundschritte aufgeteilt ist. Jeder dieser Grundschritte ist zwar in zwei Abschnitte unterteilt, zwischen denen aber nur ein Wechsel des jeweils pulsweitenmoduliert getakteten Leistungshalbleiters erfolgt. In jedem Schritt sind aber stets nur zwei der sechs Halbleiter-Schaltelemente der Leistungsbrückenschaltung aktiv, so dass immer nur zwei der drei Wicklungsanschlüsse aktiv über die Schaltelemente mit dem positiven oder negativen Anschluß der Gleichspannungsquelle verbunden werden. Daher können nur sechs verschiedene Richtungen der Stator-Erregung existieren, so dass es sich eindeutig um eine 6-Schritt-Kommutierung im eigentlichen Sinne handelt.

Einen zur US-A-5 491 393 sehr ähnlichen Stand der Technik offenbart auch die US-A-5 835 992, wonach ebenfalls sechs mal zwei Schaltzustände bzw. Schalterkombinationen vorgesehen sind, jedoch wird auch dort die Richtung der Stator-Erregung in nur sechs Schritten geändert (=6-Schritt-Kommutierung).

Der vorliegenden Erfindung liegt die Aufgabe zugrunde, ein System der eingangs beschriebenen, gattungsgemäßen Art zu schaffen, mit dem unter Aufrechterhaltung der kostengünstigen und störungsunanfälligen, sensorlosen Rotorpositionserfassung eine Reduzierung von Lauf- und Kommutierungsgeräuschen erreicht wird.

Erfindungsgemäß wird dies bei einem gattungsgemäßen System dadurch erreicht, daß die Steuereinheit die Leistungshalbleiter in Abhängigkeit von den Rotor-Drehstellungen über eine elektrische Umdrehung des Gleichstrommotors hinweg mittels einer 12-Schritt-Kommutierung in zwölf unterschiedlichen Schaltzuständen ansteuert. Diese 12-Schritt-Kommutierung erfolgt derart, dass jeder dieser zwölf Schaltzustände einen anderen Erregungszustand des Stators betreffend der Richtung des in ihm erzeugten magnetischen Feldes bewirkt. Dazu ist es vorgesehen, dass einerseits Schaltzustände, in denen zwei Leistungshalbleiter der Halbleiterbrücke angesteuert sind, und andererseits Schaltzustände, in denen drei Leistungshalbleiter angesteuert sind, ständig alternierend auftreten. Im Gegensatz dazu, werden bei einer 6-Schritt-Kommutierung die Leistungshalbleiter in solchen Schaltzuständen angesteuert, die ausschließlich zu sechs verschiedenen Erregungszuständen des Stators führen. Bei der 12-Schritt-Kommutierung wird die Statorerregung jeweils um kleinere Winketschritte als bei einer 6-Schritt-Kommutierung weitergeschaltet, wodurch ein kontinuierlicher umlaufendes Statorfeld erzeugt wird.

Der Erfindung liegt zunächst die Erkenntnis zugrunde, daß es bei Anwendung einer 6-Schritt-Kommutierung während des Kommutierungszeitpunktes durch eine sprunghafte Änderung der Statorerregung zu Motorgeräuschen, dem sogenannten "Kommutierungsklicken", kommt. Bei Anwendungen des Elektromotors als Antrieb für einen Ventilator oder ein Gebläse sind diese Kommutierungsgeräusche vor allem im unteren Drehzahlbereich, in dem die Strömungsgeräusche in den Hintergrund treten, sehr ausgeprägt und störend und können deshalb in vielen Anwendungsfällen nicht akzeptiert werden. Erfindungsgemäß kann demgegenüber eine deutliche Reduzierung dieser Geräusche (insbesondere bei solchen Motoren mit außenliegendem Rotor) erreicht werden, indem pro elektrischer Umdrehung anstatt nur sechs Schaltzustände nunmehr doppelt so viele Schaltzustände der Leistungshalbleiter der Halbleiterbrücke vorgegeben werden, d.h. die Statorerregung in zwölf anstatt in sechs Schritten innerhalb eines elektrischen Drehwinkels von 360° weitergeschaltet wird.

Nun ist zwar eine solche 12-Schritt-Kommutierung an sich bekannt, allerdings ausschließlich mit gesonderten Sensoren zur Rotor-Positionserfassung. Dies liegt daran, daß die Fachwelt bisher stets davon ausging, daß eine sensorlose Ausführung einer 12-Schritt-Kommutierrung nicht möglich ist, weil eine sensorlose Rotorpositionserfassung stets voraussetzt, daß jeweils ein Wicklungsanschluß stromlos, also von der Gleichspannungsquelle getrennt ist, um die induzierte Polradspannung (EMK) überhaupt mit einer sensorlosen Auswerteeinheit erfassen zu können. Dies ist aber bei einer 12-Schritt-Kommutierung im Unterschied zur 6-Schritt-Kommutierung nicht generell der Fall, weil es zu Bereichen mit Wicklungsstromüberlappungen kommt, in denen alle drei Wicklungsanschlüsse stromführend sind.

Insofern beruht die vorliegende Erfindung auf der weiteren Erkenntnis, daß eine 12-Schritt-Kommutierung nur dann möglich ist, wenn dafür gesorgt wird, daß Polaritätswechsel bzw. Nulldurchgänge der Polradspannung genau in solche - bei 12-Schritt-Kommutierung drastisch verkürzte - Intervalle fallen, in denen jeweils der entsprechende Wicklungsanschluß von der Gleichspannungsquelle getrennt ist und daher zur Erfassung der steuerungsrelevanten Größen benutzt werden kann.

Konkret wird dies bevorzugt dadurch erreicht, daß die EMK-Auswerteeinheit jeweils die Polradspannung zwischen einem Motorwicklungsanschluß und einem gemeinsamen Bezugspunkt erfaßt und auswertet. Dabei kann es sich bei dem Bezugspunkt entweder - wenn die Motorwicklungen in Sternschaltung geschaltet sind - um den tatsächlichen, über eine Leitung herausgezogenen Motor-Stempunkt handeln oder aber um eine Stempunkt-Nachbildung. Dazu sei bemerkt, daß ja auch eine Motor-Dreieckschaltung fiktiv in eine Sternschaltung transferiert werden kann. Es erfaßt die EMK-Auswerteeinheit demnach praktisch die jeweilige Strangspannung bzw. "Strang-EMK" im Sternsystem anstatt der demgegenüber um 30° phasenverschobenen, verketteten, d.h. zwischen zwei Wicklungsanschlüssen meßbaren "Leiter-EMK". Durch diese erfindungsgemäße Maßnahme wird erreicht, daß Nulldurchgänge der Polradspannung überhaupt erfaßt werden können, weil diese genau in die Schritte fallen, in denen jeweils ein Wicklungsanschluß gerade über einen kurzen Bereich von 30° stromlos ist. Im Gegensatz dazu wäre eine Erfassung und Auswertung der jeweils zwischen zwei Motorwicklungsanschlüssen liegenden Spannung für eine 12-Schritt-Kommutierung nicht geeignet, weil dabei die Nulldurchgänge der induzierten Polradspannung stets dann auftreten würden, wenn alle drei Wicklungsanschlüsse stromführend, d.h. mit der Gleichspannungsquelle verbunden sind, so daß eine Erfassung gar nicht möglich wäre.

Weitere vorteilhafte Ausgestaltungsmerkmale der Erfindung sind in den Unteransprüchen enthalten.

Anhand der Zeichnung soll nun die Erfindung beispielhaft genauer erläutert werden. Dabei zeigen:
- Fig. 1: ein Prinzipschaltbild eines erfindungsgemäßen Kommutierungssystems,
- Fig. 2: ein Schaltbild einer bevorzugten Ausführung einer EMK-Auswerteeinheit,
- Fig. 3: unterschiedliche Diagramme zur Erläuterung der Abläufe bei der Anwendung des erfindungsgemäßen Kommutierungssystems,
- Fig. 4: ein Flußdiagramm des Steuerungsablaufs für das erfindungsgemäße Kommutierungssystem,
- Fig. 5: ein entsprechendes Flußdiagramm speziell für den Startvorgang,
- Fig. 6: Diagramme für Start und Normalbetrieb und
- Fig. 7: eine vergrößerte Darstellung des Zeitbereichs VII in Fig. 6.

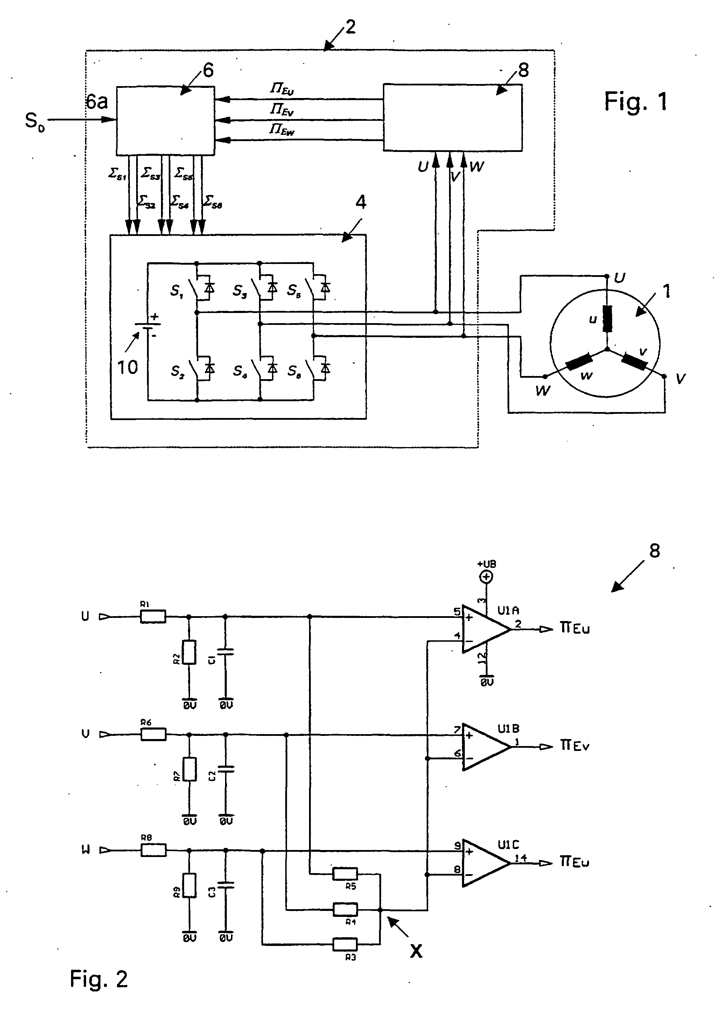

Wie sich zunächst aus Fig. 1 ergibt, wird ein dreiphasiger bzw. dreisträngiger Gleichstrommotor 1 von einem Kommutierungssystem (Kommutierungselektronik) 2 angesteuert. Von dem Motor 1 ist nur ein Stator mit drei elektrisch um jeweils 120° versetzten Wicklungssträngen u,v,w angedeutet; ein zugehöriger permanentmagnetischer Rotor (Polrad) ist nicht dargestellt. Im dargestellten Beispiel sind die Wicklungsstränge u,v,w in Sternschaltung geschaltet, allerdings ist erfindungsgemäß durchaus auch eine Dreieckschaltung möglich. Die Wicklungsstränge u,v,w sind über ihre Stranganschlüsse U,V,W mit einem als Halbleiterbrücke 4 ausgebildeten Leistungsteil verbunden. Die Halbleiterbrücke 4 besteht aus sechs Leistungshalbleitern S₁ bis S₆, die ihrerseits von einer Steuereinheit 6 über Steuersignale Σ _{S1} bis Σ _{S6} angesteuert werden, und zwar in Abhängigkeit von den jeweiligen Drehstellungen des Rotors. Zur Erfassung der Rotordrehstellungen ist eine EMK-Auswerteeinheit 8 vorgesehen, die mit den Wicklungsstranganschlüssen U,V und W verbunden ist, um die in den Wicklungssträngen u,v,w jeweils durch den rotierenden Rotor induzierte EMK bzw. die sog. Polradspannung zu erfassen und bezüglich ihrer Polaritäten bzw. Nulldurchgänge auszuwerten. In Abhängigkeit davon erzeugt die EMK-Auswertung 8 entsprechende Ausgangssignale Π_{EU}, Π_{EV} und Π_{EW} für die Steuereinheit 6. Zur Erzeugung eines magnetischen Statordrehfeldes werden von der Steuereinheit 6 die Leistungshalbleiter S₁ bis S₆ in jeweils zyklisch wechselnden Kombinationen angesteuert, indem die Wicklungsanschlüsse U,V,W entweder mit dem positiven oder dem negativen Anschluß einer Gleichspannungsquelle 10 verbunden oder hochohmig von der Spannungsquelle 10 getrennt werden. Ein Betrieb des Motors 1 hinsichtlich eines hohen Wirkungsgrades ist ― unter Vernachlässigung der elektrischen Zeitkonstante der Motor-Wicklungsstränge - dann erreicht, wenn die zwischen den Wicklungsanschlüssen U,V,W erfaßbare EMK den gleichen Verlauf und die gleiche Phasenlage wie die von der Halbleiterbrücke 4 an diesen Anschlüssen vorgegebene Spannung hat. Zur entsprechenden Ansteuerung werden der Steuereinheit 6 die Ausgangssignale Π_{EU}, Π_{EV} und Π_{EW} der EMK-Auswerteeinheit 8 zugeführt, welche der Polarität der in den Wicklungssträngen u,v,w des Motors 1 induzierten EMK entsprechen bzw. die derzeitige Position des Rotors widerspiegeln. Darüber hinaus weist die Steuereinheit 6 einen Steuereingang 6a auf, über den ein Drehzahlstellsignal S_{D} zur Beeinflussung der Motordrehzahl zugeführt werden kann.

In denjenigen Phasen, in denen jeweils zwei der drei Wicklungsstränge an die speisende Gleichspannungsquelle 10 geschaltet sind, der dritte Wicklungsanschluß aber hochohmig von der Spannungsquelle 10 getrennt ist, kann letzterer zur Erfassung der in diesem Wicklungsstrang induzierten EMK (Polradspannung) genutzt werden. Die EMK-Auswertung 8 erfaßt die jeweilige Polarität der Strang-EMK und erzeugt daraus die drei binären Ausgangssignale Π_{EU}, Π_{EV} und Π_{EW}, die jeweils einem Wicklungsstrang zugeordnet sind und die beispielsweise ein logisches 1-Signal liefern bei positiver Spannung an dem entsprechenden Wicklungsstrang und ein logisches 0-Signal bei negativer Strangspannung. Über eine elektrische Umdrehung des Motors 1 ergeben sich dadurch ― grundsätzlich analog zu einer sensorbehafteten Methode mit im Motor angeordneten Hall-Sensorschaltungen ― sechs verschiedene Ausgangskombinationen, denen eine bestimmte Rotorlage (in 60°-Segmenten) eindeutig zugeordnet werden kann.

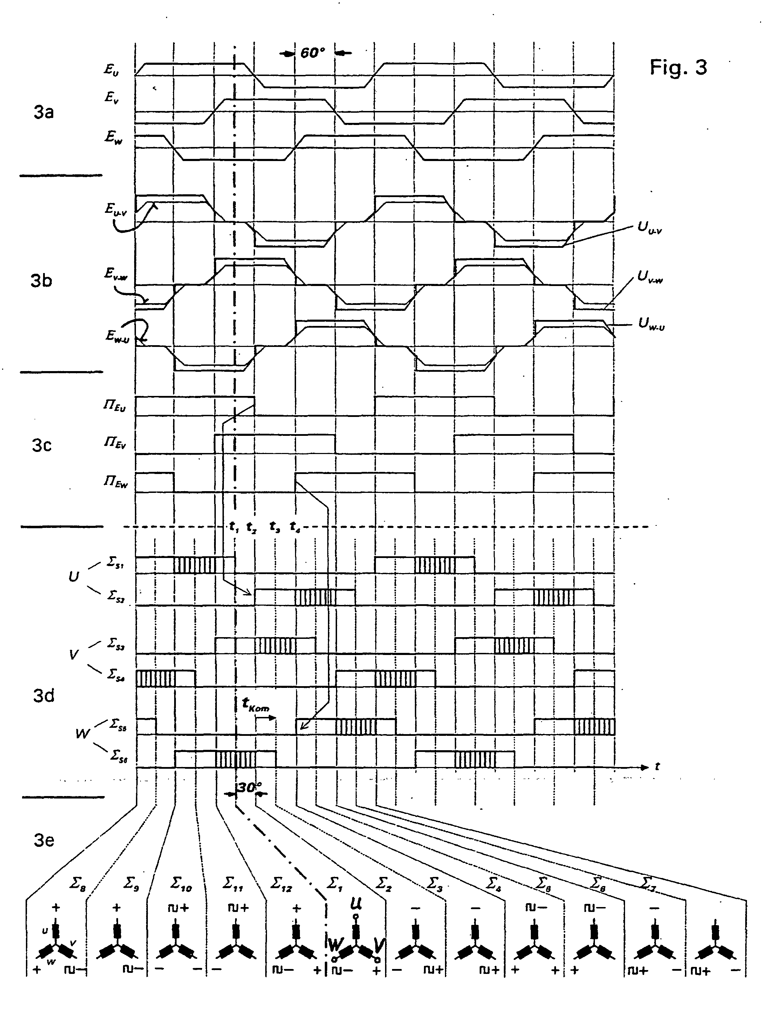

In Fig. 3 sind bei 3a schematisch die vom rotierenden Polrad induzierten Spannungen (EMK's) E_{U,} E_{V} und E_{W} in den einzelnen Wicklungssträngen veranschaulicht. Im Diagramm 3b sind die entsprechenden Spannungen E_{U-V}, E_{V-W} und E_{W-U} veranschaulicht, die jeweils zwischen zwei Wicklungsanschlüssen erfaßbar wären. Zusätzlich zeigt Diagramm 3b den realen überlagerten Verlauf der an die Wicklungsanschlüsse angelegten Spannungen U_{U-V}, U_{V-W} und U_{W-U} und der induzierten Spannungen. Im Diagramm 3c sind die Ausgangssignale Π_{EU}, Π_{EV} und Π_{EW} der EMK-Auswertung 8 idealisiert und beispielhaft für den in Stern geschalteten Motor dargestellt.

Obwohl sich die Zustände der in Fig. 3c dargestellten Ausgangssignale jeweils alle 60°el ändern, ist vorgesehen, daß die Steuereinheit 6 die Leistungshalbleiter S₁ bis S₆ der Halbleiterbrücke 4 in Abhängigkeit von den Ausgangssignalen gemäß Fig. 3c über eine elektrische Umdrehung hinweg mittels einer 12-Schritt-Kommutierung, d.h. in zwölf unterschiedlichen Schaltzuständen, ansteuert. Hierbei wechseln sich einerseits Zustände, bei denen zwei der sechs Leistungshalbleiter angesteuert werden, und andererseits solche, bei denen drei der sechs Leistungshalbleiter angesteuert werden, ab. Bei denjenigen Schaltzuständen mit zwei aktiven Leistungshalbleitern sind zwei der drei Wicklungsanschlüsse (U, V, W) mit der Gleichspannungsquelle 10 verbunden und bei denen mit drei aktiven Leistungshalbleitern sind alle Wicklungsanschlüsse mit der Gleichspannungsquelle verbunden. Jeder dieser Schaltzustände führt zu einem anderen Erregungszustand des Stators, was die Richtung des in ihm erzeugten magnetischen Feldes betrifft. In bevorzugter Ausgestaltung wird in jedem dieser Schaltzustände einer der Leistungshalbleiter zur Drehzahlstellung vorzugsweise pulsweitenmoduliert getaktet.

Da sich bei einer 12-Schritt-Kommutierung zwangsläufig Phasen ergeben, in denen zeitweise alle drei Wicklungsanschlüsse auf definiertem Potential liegen und dadurch kein offener Wicklungsanschluß zur Erfassung der EMK zur Verfügung steht, wird dafür gesorgt, daß die steuerungstechnisch relevanten Nulldurchgänge der EMK's in diejenigen Intervalle fallen, in denen jeweils ein Wicklungsanschluß von der Gleichspannungsquelle getrennt ist.

Gemäß Fig. 2 wird dies durch eine spezielle Art der EMK-Auswerteeinheit 8 erreicht, die derart ausgelegt ist, daß sie jeweils die Polradspannung (EMK) zwischen einem Motorwicklungsanschluß U, V, W und einem gemeinsamen Bezugspunkt X erfaßt und auswertet. Im dargestellten Schaltungsbeispiel nach Fig. 2 handelt es sich bei dem Bezugspunkt X um einen resistiv nachgebildeten Sternpunkt des Motors. Die an den Wicklungsanschlüssen U, V, W abgegriffenen Spannungen werden mit dem am Bezugspunkt X anstehenden Potential mittels Komparatoren U1A, U1B bzw. U1C verglichen, an deren Ausgängen die binären Ausgangssignale Π_{EU}, Π_{EV} und Π_{EW} erzeugt werden.

Wie sich nun weiterhin aus Fig. 3 ergibt, leitet die Steuereinheit 6 aus den Ausgangssignalen Π_{EU}, Π_{EV} und Π_{EW} der EMK-Auswertung 8 die Ansteuersignale Σ_{S1} bis Σ_{S6} für die Halbleiterbrücke 4 ab. Dieser Zusammenhang ergibt sich aus den Diagrammen 3c, 3d und ergänzend 3e, wobei 3d die einzelnen Ansteuersignale für die Leistungshalbleiter veranschaulicht, und 3e zeigt die Wicklungsstränge des Motors in den jeweils zugehörigen Erregungszuständen. Die zwölf verschiedenen Schaltzu-Schaltzustände Σ₁ bis Σ₁₂ der Leistungshalbleiter nach Fig. 3d bewirken zwölf unterschiedliche Erregungszustände des Stators (Fig. 3e) bezüglich der an die Wicktungsanschlüsse des Motors angelegten Spannungen, die zum Aufbau des magnetischen Statorfeldes in zwölf unterschiedlichen, aufeinanderfolgenden Richtungen führen. Das Funktionsprinzip im Normalbetrieb soll nun ausgehend vom Zustand Σ₁ erläutert werden.

Im Zustand Σ₁ sind die Schalter S₃ und S₆ aktiv. S₃ leitet ständig, S₆ wird vorzugsweise zur Drehzahlstellung pulsweitenmoduliert getaktet, was der schraffiert gezeichnete Teil des Σ_{S6}-Signals andeuten soll. Da nur zwei Halbleiterschalter leiten, ist die Detektion der EMK im derzeit nicht stromdurchflossenen Wicklungsstrang u, d.h. am nicht mit der Gleichspannungsquelle 10 verbundenen Wicklungsanschluß U möglich. Durch Drehung des Rotors wechselt die EMK in diesem Wicklungsstrang zum Zeitpunk t₂ ihre Polarität, was in einem Pegelwechsel des Π_{EU}-Signals resultiert. Diese Flanke löst den Schaltzustand Σ₂ aus, der gemäß der 12-Schritt-Kommutierung zwischen zwei Zustände der konventionellen 6-Schritt-Kommutierung zur Reduzierung des Kommutierungsgeräusches und der Laufgeräusche des Motors gelegt wird. Bei diesem Zustand sind die Leistungshalbleiter S₂, S₃ und S₆ leitend, d.h. alle Wicklungsanschlüsse sind mit der Gleichspannungsquelle 10 verbunden, weshalb eine Detektion der EMK nicht mehr möglich ist. Deshalb wird eine Kommutierungszeit tₖₒₘ aus der aktuellen Drehzahl des Motors und einem vorgegebenen Drehwinkel ϕₖₒₘ berechnet. Diese Zeit tₖₒₘ beginnt zum Zeitpunk t₂ und endet im Zeitpunkt t₃ des Übergangs zum nächsten Schaltzustand Σ₃, bei dem S₆ ausgeschaltet wird. Der Wicklungsanschluß W ist nun nicht mehr mit der Gleichspannungsquelle 10 verbunden, was eine Detektion der EMK im Strang w ermöglicht. Mit dem nächsten Pegelwechsel des Π_{EW} ―Signals zum Zeitpunkt t₄ wiederholt sich dieser Ablauf sinngemäß, wie sich dies aus Fig. 3d ergibt.

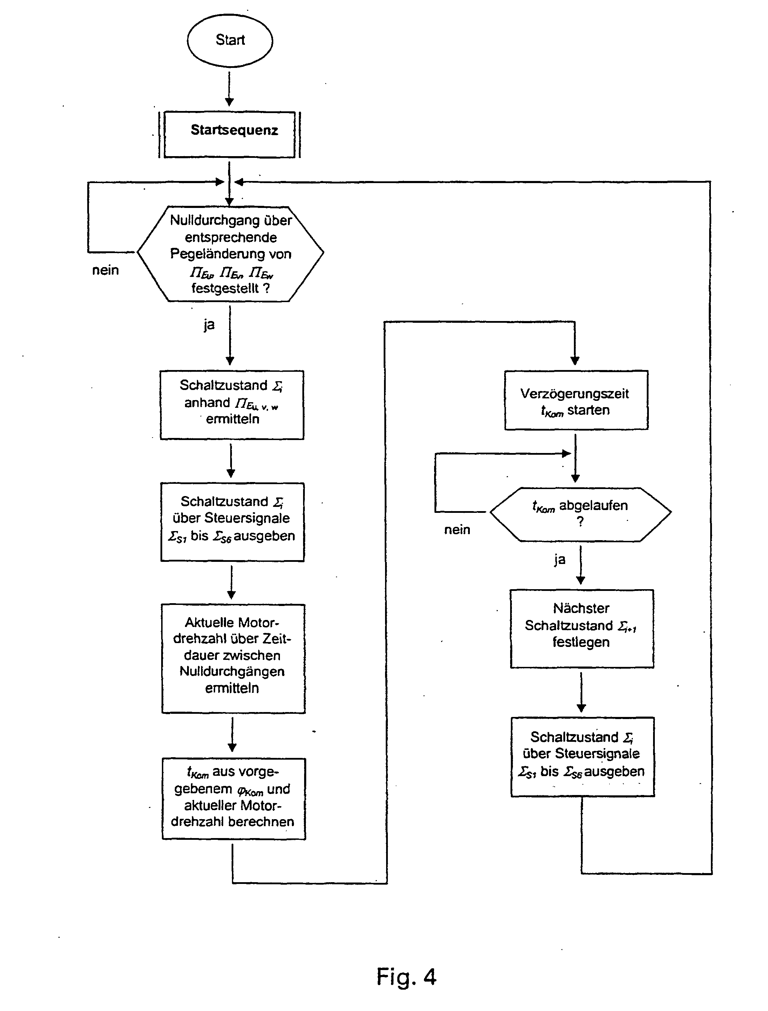

In Fig. 4 ist dieser beschriebene Steuerungsablauf allgemeiner in Form eines Flußdiagramms dargestellt. Aufgrund der in Fig. 4 enthaltenen Textbestandteile sind weitere Erläuterungen nicht notwendig.

Gemäß Fig. 3 liegen folgende Regelmäßigkeiten bei der bevorzugt vorgesehenen Pulsweitenmodulation zur Änderung der effektiven Wicklungsspannung, d.h. zur Beeinflussung der Drehzahl vor:
a) Während jedem Kommutierungsschritt wird maximal ein Leistungshalbleiter pulsweitenmoduliert getaktet.
b) Jeder Halbleiter wird für einen zusammenhängenden elektrischen Winkel von 60° pulsweitenmoduliert getaktet.
c) Bei einem Wechsel von einem geradzahligen Zustand (Σ₂, Σ₄ ...), wobei jeweils drei Halbleiter aktiv sind, zu einem ungeradzahligen Zustand (Σ₁, Σ₃ ...) mit jeweils zwei aktiven Halbleitern wechselt der pulsweitenmoduliert getaktete Halbleiter nicht. Beim Wechsel von einem ungeradzahligen Zustand zu einem geradzahligen Zustand wechselt der pulsweitenmoduliert getaktete Halbleiter.
d) Der Aussteuergrad der pulsweitenmoduliert getakteten Halbleiter bei geradzahligen und ungeradzahligen Zuständen ist vorzugsweise unterschiedlich, insbesondere bei geradzahligen Zuständen kleiner als bei ungeradzahligen.

Wie schon erläutert wurde, ist die sensorlose 12-Schritt-Kommutierung möglich, weil bei der Kommutierungsabfolge in Verbindung mit der speziellen EMK-Auswertung 8 z.B. gemäß Fig. 2 der Polaritätswechsel der EMK in einem Strang stets zu einem Zeitpunkt geschieht, bei dem der korrespondierende Wicklungsanschluß offen ist und dadurch zur Erfassung und Auswertung der vom Polrad induzierten Spannung zur Verfügung steht.

Die elektrische Zeitkonstante der Motorwicklung ist in der Realität nicht Null. Dadurch kommt es zu einer frequenz- bzw. drehzahlabhängigen Phasenverschiebung zwischen dem Wicklungsstrom und der an den Wicklungen anstehenden Wechselspannung, wodurch der Motorwirkungsgrad sinkt. Um dies auszugleichen, sollte die Kommutierung mit zunehmender Drehzahl zu einem früheren Zeitpunkt erfolgen.

Für die ungeradzahligen Zustände Σ₁, Σ₃, Σ₅, Σ₇, Σ₉ und Σ₁₁ geschieht dies erfindungsgemäß über den Winkel ϕₖₒₘ, der an die aktuelle Drehzahl des Motors angepaßt wird. Mit steigender Drehzahl wird ϕₖₒₘ kleiner, wodurch die Kommutierung früher durchgeführt wird. Bei den geradzahligen Zuständen Σ₂, Σ₄, Σ₄, Σ₆, Σ₈, Σ₁₀ und Σ₁₂ ist eine solche Vorzündung nicht möglich, da sonst der Polaritätswechsel der EMK nicht mehr detektiert werden könnte.

In einer vorteilhaften Ausgestaltung der Erfindung wird der Winkel ϕₖₒₘ in Abhängigkeit von der Drehzahl hinsichtlich des gewünschten Motorverhaltens angepaßt. Im allgemeinen ist ein möglichst hoher Wirkungsgrad gefordert, wodurch der Winkel ϕₖₒₘ degressiv mit der Drehzahl verändert wird. Die geradzahligen Zustände Σ₂, Σ₄ bis Σ₁₂ werden dagegen zeitgleich mit dem Polaritätswechsel der EMK vorgegeben.

Bei einer weiteren vorteilhaften Variante werden ab einer festgelegten Drehzahl n_{Grenz} des Motors die geradzahligen Zustände durch die zuvor bestehenden ungeradzahligen Zustände ersetzt. Ist die Drehzahl kleiner als n_{Grenz}, wird die Abfolge ... Σ₁, Σ₂, Σ₃ .... Σ₁₁, Σ₁₂, Σ₁... von der Steuereinheit 6 vorgegeben, ist die Drehzahl dagegen größer, liegt die Abfolge ...Σ₁, Σ₁, Σ₃, Σ₃, ... Σ₁₁, Σ₁₁, Σ₁ ... vor. Entsprechendes gilt selbstverständlich auch in umgekehrter Reihenfolge für die andere Drehrichtung des Motors.

Bisher wurde von einem sich drehenden Motor ausgegangen (Normalbetrieb). Im Stillstand des Motors wird aber (noch) keine EMK in den Wicklungen induziert, wodurch die Information über die Lage des Rotors fehlt. Für den sensorlosen Start wird deshalb bevorzugt ein spezielles Verfahren angewandt. Dabei kann vorteilhafterweise die 12-Schritt-Kommutierung auch auf den Startvorgang des Motors übertragen werden. Insbesondere werden hierbei die ― gegenüber der 6-Schritt-Kommutierung ― bei der 12-Schritt-Kommutierung zusätzlich eingefügten Zwischenschritte angewendet.

Gemäß dem Stand der Technik wird zum Start des Motors ― nach dem Ausrichten des Rotors in eine definierte Lage durch Bestromung der Wicklungen mit Gleichstrom ― eine Schrittsequenz ohne Berücksichtigung der Signale der EMK-Auswertung vorgegeben (sog. offener Wirkungskreis), bis eine ausreichend hohe Drehzahl erreicht ist, d.h. die Amplitude der EMK genügend groß ist, um ihre Polarität zu erfassen. Diese Schrittsequenz wird für eine bestimmte mechanische Zeitkonstante des Antriebssystems festgelegt. Schwierigkeiten ergeben sich bei sich ändernden Lastverhältnissen oder unterschiedlichen Trägheitsmomenten. Hier kann es vorkommen, daß der Rotor der Schrittsequenz nicht folgen kann und daher nicht anläuft.

Aus Kostengründen wird häufig zur Ansteuerung der gemäß Fig. 1 "oberen" (ungeradzahligen) Leistungshalbleiter S₁, S₃, S₅ für die Spannungsversorgung der zugehörigen Treiberstufen eine sog. Boot-Strap-Schaltung angewandt. Dieses Schaltungsprinzip hat aber den Nachteil, daß die "oberen" Halbleiterschalter nicht beliebig lange eingeschaltet werden können, oder ein Brückenzweig nicht beliebig lange inaktiv sein kann, da sonst die Spannung über der Boot-Strap-Kapazität auf einen unzureichenden Wert abfallen kann. Bei langsam anlaufenden Motoren kann es zu Schwierigkeiten bei der Ansteuerung kommen.

Ein bevorzugtes Startverfahren soll die genannten Nachteile beseitigen.

Diesem bevorzugten Startverfahren liegt die Erkenntnis zugrunde, daß die EMK schon bei verhältnismäßig kleinen Drehzahlen zuverlässig erfaßt werden kann, solange alle Wicklungen stromlos sind. Bei Stromfluß sind u.a. durch die Störungen infolge der Schaltvorgänge bei Pulsweitenmodulation höhere Drehzahlen, d.h. größere Amplituden der EMK erforderlich, um die EMK zuverlässig auswerten zu können.

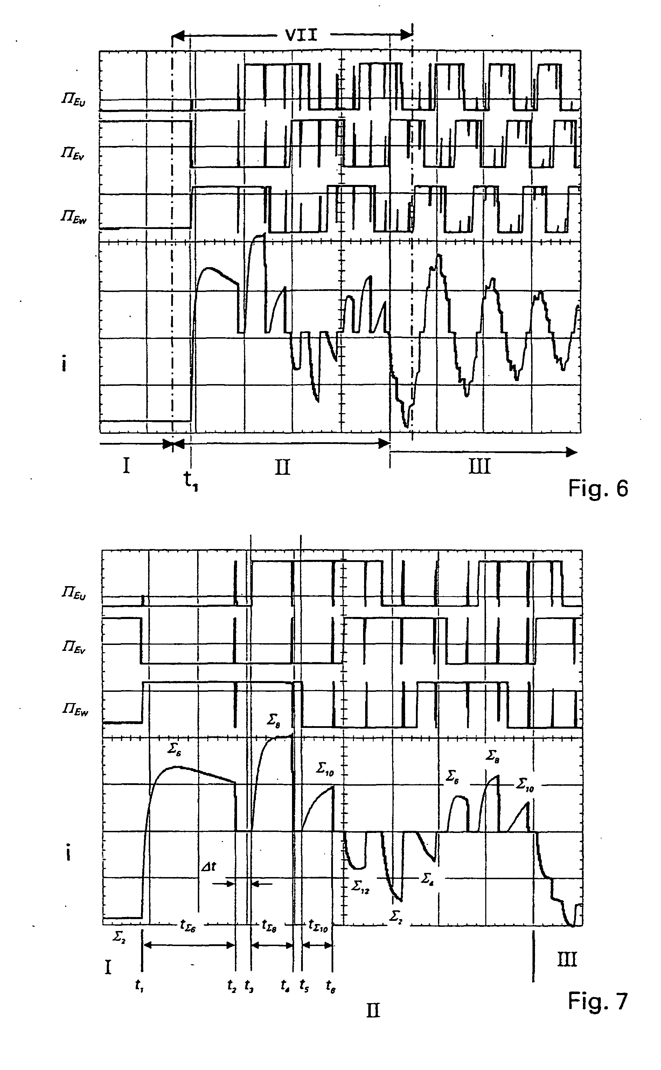

In Fig. 6 sowie in der Ausschnittvergrößerung in Fig. 7 sind jeweils die Ausgangssignale Π_{EU}, Π_{EV} und Π_{EW} der EMK-Auswertung 8 sowie der Stromverlauf i in einer der Motorzuleitungen veranschaulicht. Der Hochlaufvorgang vom Stillstand besteht aus den Betriebsphasen I Ausrichten, II Startsequenz und III Normalbetrieb. Zum Ausrichten in der Phase I wird in alle Wicklungsstränge ein Gleichstrom eingespeist. Der Rotor richtet sich daraufhin auf eine vorgegebene Lage aus. Ausgehend von der nun bekannten, eindeutigen Rotor-Lage werden die Motorwicklungen in einer geeigneten Weise bestromt, bis eine ausreichend hohe Drehzahl erreicht ist. Anschließend erfolgt die Kommutierung nach dem oben bereits beschriebenen Prinzip. Die spezielle Anlaufsequenz II soll im Folgenden anhand der Fig. 7 genauer beschrieben werden.

Nach dem Ausrichten des Rotors, z.B. indem der Schaltzustand Σ₂ von der Steuereinheit 6 über die Steuersignale Σ_{S1} bis Σ_{S6} ausgegeben wird (vgl. dazu Fig. 3), erfolgt zu einem Zeitpunkt t₁ die Vorgabe von Zustand Σ₆, was eine Weiterschaltung des Statorfeldes zur Folge hat, wodurch der Rotor in die gewünschte Drehrichtung beschleunigt. Dieser Zustand wird für die Zeitdauer t_{Σ6} beibehalten, bis zum Zeitpunkt t₂ alle Halbleiter der Halbleiterbrücke 4 ausgeschaltet werden. Hierdurch werden die Wicklungsstränge stromlos, wodurch trotz der noch verhältnismäßig kleinen Drehzahl eine sichere Detektion der Polaritätsänderung der EMK im Strang u zum Zeitpunkt t₃ möglich wird, was die steigende Flanke des Signals Π_{EU} signalisiert. Daraufhin wird der nachfolgende Zustand Σ₈ für die Zeitdauer t_{Σ8} aktiviert. Die nach dem Ausschalten zum Zeitpunkt t₄ stromlos gewordene Wicklung erlaubt eine zuverlässige Detektion des Polaritätswechsels der EMK im Strang w, signalisiert durch die fallende Flanke von Signal Π_{EW} zum Zeitpunkt t₅. Diese Flanke leitet den Zustand Σ₁₀ ein. Diese Abfolge wiederholt sich sinngemäß, bis entweder eine festgelegte Anzahl von Zuständen N_{Σ} ausgegeben oder eine festgelegte Drehzahl nₘᵢₙ überschritten wurde. Ist dies der Fall, dann erfolgt der Übergang zum Normalbetrieb, d.h. die Anwendung des oben erläuterten Prinzips der 12-Schritt-Kommutierung.

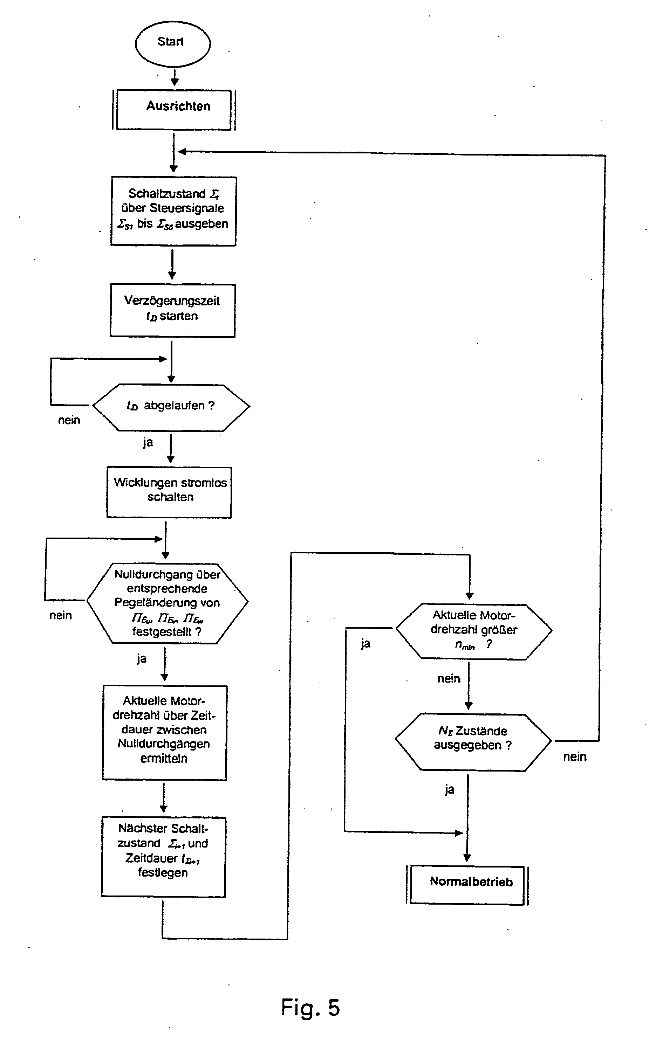

In Fig. 5 ist ergänzend noch der beschriebene Ablauf des Grundprinzips des Startvorgangs allgemein in Form eines Flußdiagramms dargestellt.

Die beschriebene Methode hat den entscheidenden Vorteil, daß es sich um einen geschlossenen Wirkungskreis handelt, d.h. von der ersten Beschleunigungsphase nach dem Ausrichten des Rotors an wird stets der Verlauf der EMK in den Steuerungsablauf mit einbezogen. Im Vergleich zu einer Startsequenz mit offenem Wirkungskreis, wobei zu Beginn aufgrund der ständigen Bestromung der Wicklung die Detektion der EMK nicht möglich ist, wird ein wesentlich besseres Anlaufverhalten erreicht. Selbst dann, wenn der Motor unter einer stärkeren Last anlaufen muß, erfolgt die Kommutierung stets zum richtigen Zeitpunkt, da eine Miteinbeziehung der EMK erfolgt.

Bei den während der Startsequenz II vorgegebenen Zuständen (im Beispiel Σ₂, Σ₆, Σ₈, Σ₁₀ ...) handelt es sich erfindungsgemäß ausschließlich um die zum Erreichen der 12-Schritt-Kommutierung eingefügten Kommutierungsschritte, bei denen alle drei Wicklungsanschlüsse mit der Gleichspannungsquelle 10 verbunden sind, d.h. stets jeweils drei Leistungshalbleiter aktiv sind. Zur Begrenzung des Wicktungsstromes werden die "oberen" (ungeradzahligen) Leistungshalbleiter der Halbleiterbrücke 4 nach Fig. 1 pulsweitenmoduliert getaktet. Diese Methode hat den Vorteil, daß die Ladung der Boot-Strap-Kapazitäten erhalten bleibt, was bei Lösungen nach dem Stand der Technik nicht immer der Fall ist, da hier während des Anlaufs ein Wicklungsanschluß für eine längere Zeitdauer offen sein kann und sich der zum betreffenden Zweig der Halbleiterbrücke gehörende Boot-Strap-Kondensator entladen kann. Ein nicht weniger wichtiger Vorteil liegt darin, daß der Beginn der erfindungsgemäß während der Startsequenz II vorgegebenen Zustände mit dem Polaritätswechsel der EMK zusammenfällt, wodurch im Gegensatz zum Stand der Technik auf eine Verschiebung um ϕₖₒₘ verzichtet werden kann. Während des Starts liegt keine zuverlässige Information über die Drehzahl des Motors vor, weshalb eine Berechnung der erforderlichen Verzögerungszeit tₖₒₘ aus ϕₖₒₘ kritisch wäre.

Die Zeiten t_{Σ6}, t_{Σ8}, t_{Σ10}, ... nach Fig. 7 richten sich nach der kleinsten mechanischen Last und dem kleinstmöglichen Trägheitsmoment der rotierenden Teile und können auf einfache Weise aus der Bewegungsgleichung berechnet oder aber empirisch ermittelt werden.

In einer weiteren vorteilhaften Ausgestaltung dieses Verfahrens wird die Zeitdauer Δt (vgl. nochmals Fig. 7) nach dem Abschalten der Halbleiterschalter der Brücke 4, z.B. zum Zeitpunkt t₂ bis zur Detektion der Polaritätsänderung der EMK im Wicklungsstrang u zum Zeitpunkt t₃, von der Steuereinheit 6 gemessen. Δt wird als Maß herangezogen, wie schnell der Motor beschleunigt, d.h. welche mechanische Zeitkonstante des Systems vorliegt. In Abhängigkeit von der gemessenen Zeit Δtᵢ nach dem Zustand Σᵢ wird die Zeitdauer des darauffolgenden Zustandes t_{Σi+1} angepaßt, und zwar so, daß eine maximale Beschleunigung erreicht wird. Bei großem Δtᵢ vergrößert sich die Zeitdauer t_{Σi+1} und umgekehrt.

Eine mögliche Realisierung dieses Prinzips kann wie folgt aussehen. Zu einer festgelegten Startsequenz, bestehend aus aufeinanderfolgenden Zuständen (z.B. Σ₂, Σ₆, Σ₈, Σ₁₀, ...), werden für verschiedene mechanische Zeitkonstanten des Systems die zugehörigen Zeiten t_{Σ2}, t_{Σ6}, t_{Σ8}, t_{Σ10}, ... aus der Bewegungsgleichung berechnet oder empirisch ermittelt und in der Steuereinheit 6 gespeichert. Nach jedem Schritt der Startsequenz wird über Δt geprüft, wie weit die vorgegebene Zeitdauer von der optimalen abweicht und damit aus den gespeicherten Zeiten die geeignete Zeitdauer für den nachfolgenden Zustand ausgewählt. Das Verfahren paßt sich an die mechanische Zeitkonstante des Systems somit in gewissen Grenzen automatisch an. Durch diese adaptive Methode wird in einem großen Bereich von verschiedenen Lastfällen und unterschiedlichen Trägheitsmomenten ein gutes Startverhalten erreicht.

Eine weitere Verbesserung dieses Prinzips stellt eine selbstiernende Methode dar, die sich während der Startsequenz auf den jeweils angeschlossenen Motor anpaßt, wenn z.B. die gleiche Elektronik mit unterschiedlichen Motoren betrieben werden soll. Voraussetzung für eine solche Methode ist jedoch, daß sich die Lastverhältnisse und Trägheitsmomente des Systems von Start zu Start nicht wesentlich ändern, wovon z.B. im Bereich der Lüftungstechnik im allgemeinen ausgegangen werden kann. Zum Start wird wiederum eine zuvor festgelegte Startsequenz wie oben bereits beschrieben vorgegeben. Während des Starts werden fortlaufend die Zeiten Δtᵢ erfaßt und die zugehörigen Zeiten t_{Σi} um die Korrekturwerte Δt_{Σi} so variiert, daß beim nächsten Hochlauf des Motors Δtᵢ gegen Null gehen würde. Die Korrektur werte Δt_{Σi} werden in der Steuereinheit 6 dauerhaft beispielsweise in einem EEPROM gespeichert. Mit jedem Start verbessert sich bei diesem Verfahren das Startverhalten des Motors. Nach einigen Anläufen wird schließlich der für den gegebenen Lastfall bzw. für das gegebene Trägheitsmoment optimale Anlauf erreicht und steht für zukünftige Anlaufvorgänge sofort zur Verfügung. Schleichende Veränderungen des Lastfalls bzw. Trägheitsmoments im System werden durch dieses Vorgehen vorteilhafterweise ebenfalls ausgeglichen, womit stets ein gleichbleibend optimierter Anlauf möglich wird.

Die im Vorherigen beispielhaft beschriebenen, der Erfindung zugrundeliegenden Steuerungsfunktionen sind in der Steuereinheit 6 in Form von kombinatorischer und sequentieller Logik realisiert, vorzugsweise mittels eines Mikroprozessors, Mikrocontrollers oder eines programmierbaren integrierten Logikschaltkreises.

Abschließend seien nochmals die wesentlichen Vorteile der Erfindung gegenüber dem Stand der Technik wie folgt zusammengefaßt.

Kostengünstige, sensorlose und geräuschlich vorteilhafte Methode zur Kommutierung eines dreisträngigen, permanenterregten Motors in Dreieck- oder Sternschaltung.

Aufgrund der 12-Schritt-Kommutierung liegen die Motorströme nahe an der Sinusform. Die daraus resultierenden geräuschlichen Verbesserungen sind insbesondere für Außenläufermotoren sehr bedeutend. Ein Außenläufermotor ist durch seine eingeschränkte Dynamik infolge der großen Massenträgheit des Außenläufer-Rotors besonders geeignet für die sensorlose 12-Schritt-Kommutierung. Dies liegt vor allem daran, daß die Berechnung der Zeit tₖₒₘ erforderlich ist. Diese muß aus der Zeitdauer zwischen den vorhergehenden Nulldurchgangsinformationen der EMK-Auswertung gewonnen werden. Dies ist vor allem dann mit einfachen Mitteln ausreichend genau möglich, wenn sich die Motordrehzahl nicht übermäßig schnell ändert. Dies macht den Außenläufer besonders geeignet.

Robuste Methode für den sensorlosen Start durch Nutzung der bei der 12-Schritt-Kommutierung zusätzlich eingefügten Zwischenzustände, die in Phase mit den Polaritätswechseln der EMK sind.

Messung der EMK beim Startvorgang im stromlosen Zustand der Wicklungen, was die zuverlässige EMK-Auswertung schon bei relativ kleinen Drehzahlen ermöglicht. Dadurch kann auch beim Startvorgang mit einem geschlossenen Wirkungskreis gearbeitet werden, d.h. die Informationen der EMK-Auswertung können in den Ablauf beim Start mit einbezogen werden. Dadurch wird das Startverhalten verbessert und toleranter gegenüber Änderungen der Last und des Massenträgheitsmoments.

Adaptive Startverfahren durch Vergleich der vorgegebenen Kommutierungszeit mit der idealen Kommutierungszeit durch Detektion der EMK im stromlosen Zustand der Wicklungen und Anpassung der folgenden Kommutierungszeiten an die mechanische Zeitkonstante des Systems.

Die Erfindung ist nicht auf die dargestellten und beschriebenen Ausführungsbeispiele beschränkt, sondern durch die Merkmalskombination des Anspruchs 1 definiert. Bevorzugte Ausgestaltungen sind in den abhängigen Ansprüchen definiert.

## Patentansprüche

1. System zur elektronischen Kommutierung eines bürstenlosen Gleichstrommotors (1) mit drei elektrisch um 120° versetzten Wicklungssträngen (u,v,w), mit einer die Wicklungsstränge (u,v,w) zur Erzeugung eines magnetischen Statordrehfeldes ansteuernden Halbleiterbrücke (4) bestehend aus sechs Leistungshalbleitem (S₁ bis S₆), einer die Leistungshalbleiter (S₁ bis S₆) entsprechend ansteuernden Steuereinheit (6) sowie einer Einrichtung zur Erfassung der jeweiligen Drehstellung eines ein permanentmagnetisches Polrad aufweisenden Rotors, wobei die Einrichtung zur Erfassung der Rotor-Drehstellung als sensorlose Auswerteeinheit (8) zur Auswertung der am gerade nicht angesteuerten Wicklungsanschluß des Motors meßbaren, vom rotierenden Polrad induzierten Spannung ausgebildet ist,
**dadurch gekennzeichnet, dass** die Steuereinheit (6) die Leistungshalbleiter (S₁ bis S₆) in Abhängigkeit von den Rotor-Drehstellungen über eine elektrische Umdrehung des Gleichstrommotors (1) hinweg mittels einer 12-Schritt-Kommutierung in zwölf unterschiedlichen Schaltzuständen ansteuert.

2. System nach Anspruch 1,
**dadurch gekennzeichnet, dass** durch die zwölf unterschiedlichen Schaltzustände der Leistungshalbleiter (S₁ bis S₆) das Statorfeld des Motors (1) über die Wicklungen (u,v,w) in zwölf bezüglich der Magnetfeldrichtung unterschiedlichen Erregungszuständen vorgegeben wird, wobei insbesondere einerseits Schaltzustände mit zwei angesteuerten Leistungshalbleitern und andererseits Schaltzustände mit drei angesteuerten Leistungshalbleitern ständig alternierend auftreten.

3. System nach Anspruch 1 oder 2,
**dadurch gekennzeichnet, dass** die Auswerteeinheit (8) jeweils die Spannung zwischen einem Motorwicklungsanschluß (U,V,W) und einem gemeinsamen Bezugspunkt (X) erfaßt und auswertet.

4. System nach Anspruch 3,
**dadurch gekennzeichnet, dass** der gemeinsame Bezugspunkt (X) so festgelegt ist, daß die gemessenen Spannungen in Phase zu den von dem rotierenden Polrad in den in Stern geschalteten Wicklungssträngen induzierten Spannungen verläuft, oder in Phase zu den sich bei einer Transformation einer Dreieckschaltung in eine äquivalente Sternschaltung ergebenden fiktiven Strangspannungen.

5. System nach Anspruch 3 oder 4,
**dadurch gekennzeichnet, dass** der Bezugspunkt (X) von einem realen Wicklungssternpunkt des Motors direkt abgeleitet wird.

6. System nach Anspruch 3 oder 4,
**dadurch gekennzeichnet, dass** der Bezugspunkt (X) eine externe Nachbildung eines Wicklungssternpunktes des Motors ist.

7. System nach einem der Ansprüche 1 bis 6,
**dadurch gekennzeichnet, dass** dieAuswerteeinheit(8)derart ausgelegt ist, daß sie die jeweiligen induzierten Polradspannungen (E_{U}, E_{V}, E_{W}) bezüglich ihrer Polaritäten, insbesondere ihrer Nulldurchgänge, erfaßt und in Abhängigkeit davon binäre Ausgangssignale (Π_{EU}, Π_{EV}, Π_{EW}) als Steuer-Eingangssignale für die Steuereinheit (6) erzeugt.

8. System nach einem der Ansprüche 1 bis 7,
**dadurch gekennzeichnet, dass** dieSteuereinheit(6)zur Drehzahleinstellung des Motors (1) in Abhängigkeit von einem über einen Steuereingang (6a) zugeführten Drehzahlstellsignall (S_{D}) jeweils einen der Leistungshalbleiter (S₁ bis S₆) pulsweitenmoduliert getaktet ansteuert.

9. System nach Anspruch 8,
**dadurch gekennzeichnet, dass** in jedem Umdrehungszustand maximal nur einer der Leistungshalbleiter (S₁ bis S₆) pulsweitenmoduliert getaktet wird, und zwar insbesondere jeweils über einen zusammenhängenden elektrischen Winkel von 60°.

10. System nach einem der Ansprüche 1 bis 9,
**gekennzeichnet durch** eine sich drehzahlabhängig ändernde Kommutierung, wobei vorzugsweise die Kommutierung zumindest in einer Teilmenge der zwölf Kommutierungsschritte, insbesondere bei jedem zweiten Kommutierungsschritt, mit zunehmender Drehzahl jeweils früher erfolgt.

11. System nach einem der Ansprüche 1 bis 10,
**dadurch gekennzeichnet, dass** sich über die elektrische Umdrehung hinweg jeweils einerseits ungeradzahlige Zustände (Σ₁, Σ₃ ... Σ₁₁), in denen zwei Wicklungsanschlüsse bestromt und ein Wicklungsanschluß offen ist, und andererseits geradzahlige Zustände (Σ₂, Σ₄ ... Σ₁₂), in denen alle Wicklungsanschlüsse (U,V und W) bestromt sind, abwechseln, wobei zur Kommutierung die zeitliche Länge (tₖₒₘ) der geradzahligen Zustände rechnerisch aus der jeweiligen Drehzahl und einem vorgegebenen Kommutierungswinkel (ϕₖₒₘ) ermittelt wird.

12. System nach Anspruch 10 oder 11,
**dadurch gekennzeichnet, dass** zur drehzahlabhängigen Kommutierung der vorgesehene Kommutierungswinkel (ϕₖₒₘ) vorzugsweise degressiv mit der Drehzahl verändert, insbesondere mit steigender Drehzahl verkleinert wird.

13. System nach einem der Ansprüche 1 bis 12,
**dadurch gekennzeichnet, dass** zum Start des Motors (1) aus dem Stillstand zunächst der Rotor durch eine konstante Gleichstrom-Bestromung der Wicklungsstränge (u,v,w) in eine definierte Drehstellung ausgerichtet wird.

14. System nach einem der Ansprüche 1 bis 13,
**dadurch gekennzeichnet, dass** auch während des Anlaufs des Motors (1) die Kommutierung anhand der von der EMK-Auswertung (8) erfaßten Rotordrehstellungen erfolgt.

15. System nach Anspruch 14,
**dadurch gekennzeichnet, dass** während der Anlaufphase (II) des Motors (1) von der Steuereinheit (6) zur besseren Erfassung der ― bedingt durch die noch relativ geringe Drehzahl noch schwachen - EMK zeitweise alle Wicklungsstränge (u,v,w) stromlos geschaltet werden.

16. System nach einem der Ansprüche 1 bis 15,
**gekennzeichnet durch** eine adaptive Anlauf-Kommutierungssteuerung, wobei die Kommutierungszeitpunkte selbsttätig in Abhängigkeit von dem Laufverhalten bzw. der mechanischen Zeitkonstante des Antriebssystems, insbesondere vom Lastmoment und/oder Trägheitsmoment der rotierenden Teile, angepaßt werden.

## Claims

1. System for the electronic commutation of a brushless DC motor (1) having three phase windings (u, v, w) which are electrically displaced by 120°, comprising a semiconductor bridge (4) consisting of six power semiconductors (S₁ to S₆), which drives the phase windings (u, v, w) for generating a rotating magnetic stator field, a control unit (6) which correspondingly drives the power semiconductors (S₁ to S₆), and a device for detecting the respective rotational position of a rotor exhibiting a permanent-magnetic magnet wheel, the device for detecting the rotor position being constructed as sensor-less evaluating unit (8), for evaluating the voltage induced by the rotating magnet wheel which can be measured at the winding terminal of the motor which is not currently driven,
**characterized in that**, the control unit (6) drives the power semiconductors (S₁ to S₆) by means of a 12-step commutation in twelve different switching states over one electrical revolution of the DC motor (1) in dependence on the rotor positions.

2. System according to Claim 1,
**characterized in that**, due to the twelve different switching states of the power semiconductors (S₁ to S₆) the stator field of the motor (1) is predetermined in twelve excitation states, which are different with respect to the direction of the magnetic field, via the windings (u, v, w), wherein in particular, switching states with two driven power semiconductors, on the one hand, and on the other hand, switching states with three driven power semiconductors occur in a continuously alternating manner.

3. System according to Claim 1 or 2,
**characterized in that**, the evaluating unit (8) in each case detects and evaluates the voltage between a motor winding terminal (U, V, W) and a common reference point (X).

4. System according to Claim 3,
**characterized in that** the common reference point (X) is established in such a manner that the measured voltages extend in phase to the voltages induced in the star-connected phase windings by the rotating magnet wheel or in phase with the fictitious phase voltages resulting when a delta connection is transformed into an equivalent star connection.

5. System according to Claim 3 or 4,
**characterized in that** the reference point (X) is directly derived from a real winding neutral of the motor.

6. System according to Claim 3 or 4,
**characterized in that** the reference point (X) is an external simulation of a winding neutral of the motor.

7. System according to one of Claims 1 to 6,
**characterized in that** the evaluating unit (8) is designed in such a manner that it detects the respectively induced internal voltages (Eᵤ, Eᵥ, E_{w}) with respect to their polarities, especially their zero transitions and generates, in dependence thereon, binary output signals (Π_{EU}, Π_{EV}, Π_{EW}) as control input signals for the control unit (6).

8. System according to one of Claims 1 to 7,
**characterized in that** the control unit (6), for setting the speed of the motor (1), in each case drives one of the power semiconductors (S₁ to S₆) pulsed in a pulse-width-modulated manner in dependence on a speed setting signal (S_{D}) supplied by a control input (6a).

9. System according to Claim 8,
**characterized in that** in each state of revolution, only one of the power semiconductors (S₁ to S₆) at a maximum is pulsed in a pulse-width-modulated manner, especially in each case over a coherent electrical angle of 60°.

10. System according to one of Claims 1 to 9,
**characterized by** a speed-dependently changing commutation, the commutation preferably taking place at least in a subset of the twelve commutation steps, especially at each second commutation step, in each case earlier with increasing speed.

11. System according to one of Claims 1 to 10,
**characterized in that** in each case odd-numbered states (Σ₁, Σ₃ ... Σ₁₁), in which two winding terminals are energized and one winding terminal is open, on the one hand, and on the other hand, even-numbered states (Σ₂, Σ₄ ... Σ₁₂), in which all winding terminals (U,V and W) are energized, alternate over the electrical revolution, the length in time (t_{com}) of the even-numbered states being determined mathematically from respective speed and a predetermined commutation angle (ϕ_{com}) for the commutation.

12. System according to Claim 10 or 11,
**characterized in that** the commutation angle (ϕ_{com}) provided is preferably degressively changed with speed, especially with increasing speed, for the speed-dependent commutation.

13. System according to one of Claims 1 to 12,
**characterized in that**, for starting the motor (1) from standstill, the rotor is first aligned into a defined rotational position by applying a constant direct current to the phase windings (u, v, w).

14. System according to one of Claims 1 to 13,
**characterized in that** commutation takes place by means of the rotor positions detected by the EMF evaluating unit (8) even during the start-up of the motor (1).

15. System according to Claim 14,
**characterized in that**, during the start-up phase (II) of the motor (1), all phase windings (u, v, w) are temporarily de-energized by the control unit (6) for better detection of the EMF which is still weak due to the still relatively low speed.

16. System according to one of Claims 1 to 15,
**characterized by** an adaptive start-up commutation control, in which the commutation times are automatically adapted in dependence on the running characteristic, or, respectively, the mechanical time constant of the drive system, especially on the load moment and/or moment of inertia of the rotating parts.

## Revendications

1. Système de commutation électronique d'un moteur à courant continu (1) à démarreur incorporé avec trois bobinages (u, v, w) décalés électriquement de 120°, comprenant un pont de semi-conducteurs (4) constitué de six semi-conducteurs de puissance, (S₁ à S₆) commandant les bobinages (u, v, w) pour produire un champ magnétique rotatif de stator, une unité de commande (6) commandant de manière correspondante les semi-conducteurs de puissance (S₁ à S₆), ainsi qu'un dispositif pour déterminer la position de rotation d'un rotor présentant un induit à aimant permanent, dans lequel le dispositif pour déterminer la position de rotation du rotor est conçu comme une unité d'évaluation (8) sans capteur destinée à évaluer la tension mesurable au point de raccordement du bobinage du moteur quand il est non commandé, induite par l'induit en rotation,
**caractérisé en ce que** l'unité de commande (6) commande les semi-conducteurs de puissance (S₁ à S₆) en fonction des positions du rotor sur une rotation électrique du moteur à courant continu (1) au moyen d'une commutation en 12 étapes dans 12 états de commutation différents.

2. Système selon la revendication 1,
**caractérisé en ce que**, par les douze états de commutation différents des semi-conducteurs de puissance (S₁ à S₆), le champ du stator du moteur (1) est prédéterminé en douze états d'excitation différents suivant la direction du champ magnétique par l'intermédiaire des bobinages (u, v, w), des états de commutation avec deux semi-conducteurs de puissance commandés, d'une part, et des états de commutation avec trois semi-conducteurs de puissance commandés, d'autre part, se produisant de manière alternative en permanence.

3. Système selon la revendication 1 ou 2,
**caractérisé en ce que** l'unité d'évaluation (8) détermine et évalue la tension entre un pont de raccordement du bobinage du moteur (U, V, W) et un point de référence commun (X).

4. Système selon la revendication 3,
**caractérisé en ce que** le point de référence commun (X) est fixé de manière à ce que les tensions mesurées soient en phase avec les tensions induites par l'induit en rotation dans les bobinages montés en étoile, ou en phase avec les tensions par phase fictives résultant de la transformation d'un montage en triangle en un montage en étoile équivalent.

5. Système selon la revendication 3 ou 4,
**caractérisé en ce que** le point de référence (X) est dérivé directement d'un point réel de l'étoile du bobinage du moteur.

6. Système selon la revendication 3 ou 4,
**caractérisé en ce que** le point de référence (X) est une reproduction externe d'un point de l'étoile du bobinage du moteur.

7. Système selon l'une quelconque des revendications 1 à 6,
**caractérisé en ce que** l'unité d'évaluation (8) est conçue de telle façon qu'elle détermine les tensions d'induit (Eu, Ev, Ew) induites en ce qui concerne leurs polarités, en particulier leurs passages par zéro, et produise en fonction de cela des signaux de sortie binaires (Π_{EU}, Π_{EV}, Π_{EW}) en tant que signaux d'entrée pour l'unité de commande (6).

8. Système selon l'une quelconque des revendications 1 à 7,
**caractérisé en ce que** l'unité de commande (6) pour le réglage de la vitesse de rotation du moteur (1) en fonction d'un signal de réglage de la vitesse (S_{D}) amené par l'intermédiaire d'une entrée de signal (6a) commande chacun des semi-conducteurs de puissance (S₁ à S₆) en cadence avec modulation des impulsions en largeur.

9. Système selon la revendication 8,
**caractérisé en ce que**, dans chaque position de rotation, au maximum seul un des semi-conducteurs de puissance (S₁ à S₆) est cadencé avec modulation des impulsions en largeur, et en particulier sur un angle électrique de 60°.

10. Système selon l'une quelconque des revendications 1 à 9,
**caractérisé par** une commutation variant en fonction de la vitesse de rotation, la commutation s'effectuant de préférence, au moins dans une partie des douze étapes de commutation, en particulier pour une étape de commutation sur deux, avec une vitesse de rotation croissante.

11. Système selon l'une quelconque des revendications 1 à 10,
**caractérisé en ce que**, sur la rotation électrique, des états impairs (Σ₁, Σ₃, ... Σ₁₁), dans lesquels chaque fois deux points de raccordement de bobinage sont alimentés en courant et un point de raccordement de bobinage est ouvert, d'une part, alternent avec des états pairs (Σ₂, Σ₄, ... Σ₁₂), dans lesquels tous les points de raccordement de bobinage (U, V et W) sont alimentés en courant, d'autre part, la longueur dans le temps (tₖₒₘ) des états pairs étant obtenue par le calcul, pour la commutation, à partir de la vitesse de rotation et d'un angle de commutation prédéterminé (ϕₖₒₘ).

12. Système selon la revendication 10 ou 11,
**caractérisé en ce que**, pour la commutation en fonction de la vitesse de rotation, l'angle de commutation prévu (ϕₖₒₘ) varie de préférence de manière décroissante avec la vitesse de rotation, en particulier diminue lorsque la vitesse de rotation augmente.

13. Système selon l'une quelconque des revendications 1 à 12,
**caractérisé en ce que**, pour le démarrage du moteur (1) à partir de l'arrêt, le rotor est d'abord orienté dans une position de rotation définie par une alimentation en courant continu constante des bobinages (u, v, w).

14. Système selon l'une quelconque des revendications 1 à 13,
**caractérisé en ce que**, pendant le démarrage du moteur (1) également, la commutation s'effectue au moyen des positions de rotation du rotor saisies par l'unité d'évaluation de la force électromotrice (8).

15. Système selon la revendication 14,
**caractérisé en ce que**, pendant la phase de démarrage (II) du moteur (1), tous les conducteurs de phase (u, v, w) sont branchés sans courant temporairement pour une meilleure détermination de la force électromotrice, encore faible du fait de la vitesse de rotation encore relativement réduite.

16. Système selon l'une quelconque des revendications 1 à 15,
**caractérisé par** une commande de commutation de démarrage adaptative, dans lequel les moments de commutation sont adaptés automatiquement en fonction du comportement de marche ou de la constante mécanique dans le temps du système d'entraînement, en particulier du moment de charge et/ou du moment d'inertie des pièces en rotation.
